Europäisches Patentamt

(19) European Patent Office

Office européen des brevets

(11) Veröffentlichungsnummer: **0 018 000**
**B1**

(12) # EUROPÄISCHE PATENTSCHRIFT

(45) Veröffentlichungstag der Patentschrift:
17.02.82

(51) Int. Cl.³: **B 23 C 3/06**

(21) Anmeldenummer: 80102103.1

(22) Anmeldetag: 18.04.80

(54) Kurbelwellenfräsmaschine.

(30) Priorität: 18.04.79 DE 2915662

(43) Veröffentlichungstag der Anmeldung:
29.10.80 Patentblatt 80/22

(45) Bekanntmachung des Hinweises auf die Patenterteilung:
17.02.82 Patentblatt 82/7

(84) Benannte Vertragsstaaten:
AT CH FR GB IT LI SE

(56) Entgegenhaltungen:
AT-B-340 225
CH-A-415 335
DE-B2-2 658 970
DE-C-957 711
DE-U-7 106 698
Werkstatt und Betrieb, Band 110,
Heft 3, März 1977
München

(73) Patentinhaber: Gebr. Heller Maschinenfabrik GmbH,
Postfach 1428, D-7440 Nürtingen (DE)

(72) Erfinder: Schmid, Karlheinz, Amselweg 2,
D-7441 Neckartenzlingen (DE)

(74) Vertreter: Reinländer & Bernhardt Patentanwälte,
Orthstrasse 12, D-8000 München 60 (DE)

O. Gunsser »Schruppbearbeitung geschmiedeter
Kurbelwellen«
Seiten 137 bis 145
Werkstatt und Betrieb, Band 113,
Heft 2, Februar 1980
München
»NC-Drehmaschine für Kurbelwellen«
Seite 90

## Kurbelwellenfräsmaschine

Die Erfindung betrifft eine Kurbelwellenfräsmaschine nach dem Oberbegriff des Anspruchs 1.

Eine solche Kurbelwellenfräsmaschine ist bekannt (DE-B-2 658 970). Bei dieser bekannten Maschine verläuft die Ebene der Führung und entsprechend die Vorschubbewegung schräg zur Horizontalen. Der Vorschubantrieb muß deshalb bei dieser bekannten Maschine entweder in der Lage sein, das von der schräg liegenden Führung nur zum Teil abgestützte Gewicht der Fräseinheit aufzunehmen oder es müßte ein entsprechender Gewichtsausgleich vorgesehen sein, der zwar den Vorschubantrieb vom Gewicht der Fräseinheit entlasten würde, aber einen beträchtlichen Mehraufwand erfordert. Außerdem wird bei dieser bekannten Maschine der Späneabfluß noch durch eine der Längsführungen behindert, ebenso ist die Zugänglichkeit des Raumes zwischen den Werkstückeinspannungen nicht vollständig gewährleistet.

Bei Drehmaschinen werden deshalb Führungen verwendet, deren Ebene auf einer Seite des Werkstücks parallel zu dessen Achse und im wesentlichen vertikal verläuft, so daß die bei der Bearbeitung anfallenden Späne an der Führung vorbei nach unten fallen können und der Raum zwischen den Werkstückeinspannungen von einer Seite völlig frei zugänglich ist, in dem Sinne, daß der Bedienungsmann in diesen Raum eintreten kann, ohne auch nur die Möglichkeit zu haben, auf Teile der Werkzeugmaschine zu treten.

Bei Kurbelwellenfräsmaschinen sind jedoch solche als Vertikalbettmaschinen zu bezeichnende Maschinen bisher noch nicht in Erwägung gezogen werden. Die Fräseinheiten der Kurbelwellenfräsmaschinen haben ein beträchtliches Gewicht.

Der Vorschubantrieb müßte deshalb entweder in der Lage sein, auch das beträchtliche Gewicht der Fräseinheit auf und ab zu bewegen oder es müßte ein entsprechender Gewichtsausgleich vorgesehen sein, der zwar den Vorschubantrieb vom Gewicht der Fräseinheit entlasten würde, aber einen beträchtlichen Mehraufwand erfordert.

Der Erfindung liegt deshalb die Aufgabe zugrunde, eine Kurbelwellenfräsmaschine der eingangs genannten Art derart abzuwandeln, daß der Vorschubantrieb vom Gewicht der Fräseinheit praktisch vollständig entlastet wird, der Späneabfluß ungehindert erfolgen kann, und der Raum zwischen den Werkstückeinspannungen völlig frei zugänglich ist.

Diese Aufgabe wird durch die im Kennzeichenteil des Anspruchs 1 aufgeführten Maßnahmen gelöst.

Durch die Maßnahme, die bzw. jede Fräseinheit um eine parallel zur Werkstückachse verlaufende und unterhalb der Werkstückachse liegende Schwenkachse verschwenkbar zu machen, wird erreicht, daß das Gewicht der Fräseinheit voll von dieser Schwenkachse aufgenommen werden kann, die ohne jede Schwierigkeit entsprechend massiv ausgebildet werden kann. Darüber hinaus ist diese Schwenkachse schon durch die Fräseinheit selbst gegen bei der Bearbeitung anfallende Späne geschützt, so daß praktisch keine zusätzlichen Schutzmaßnahmen erforderlich sind, abgesehen von der selbstverständlichen Abdeckung der Stirnflächen. Durch die Anordnung des Vorschubantriebs auf der der Schwenkachse abgewandten Seite des Werkstücks wird erreicht, daß der Hebelarm, an dem der Vorschubantrieb angreift, auf jeden Fall größer ist als der Hebelarm, an dem das Fräswerkzeug angreift. Dadurch ergibt sich einerseits eine Reduzierung der am Vorschubantrieb angreifenden Kräfte, so daß etwa die Belastung eines in der Kopiereinrichtung verwendeten Meisterzapfens verringert wird bzw. das Drehmoment eines als Vorschubantrieb verwendeten Motors reduziert wird und andererseits eine Verlängerung der Wege, so daß beispielsweise Ungenauigkeiten des in der Kopiersteuerung verwendeten Meisterzapfens nur in wesentlich verringerter Größe eingehen bzw. bei digitaler Steuerung eine entsprechende Erhöhung der Umdrehungszahl des Antriebsmotors möglich ist, die ebenfalls der Genauigkeit zugute kommt. Ferner wird dadurch erreicht, daß auch der Vorschubantrieb aus dem Bereich des Spänefluges heraus ist.

Schließlich wird durch die Maßnahme, daß der Vorschubantrieb das Werkstück überspannt, ein geschlossener Kraftfluß um das Werkstück herum erreicht, so daß das Maschinenbett von Schnittkräften entlastet ist. Das Maschinenbett kann dadurch relativ schmal ausgebildet werden.

Es ist zwar bereits bekanntgeworden, bei einer ardersartigen Kurbelwellenfräsmaschine die Fräseinheit um eine parallel zur Werkstückachse verlaufende und unterhalb der Werkstückachse liegende Schwenkachse verschwenkbar zu machen, bei dieser befand sich jedoch ein Vorschubantrieb noch unterhalb der Schwenkachse, so daß die Maschine unnötig hoch wurde und überdies dieser Vorschubantrieb den Späneabfluß und die Zugänglichkeit des Maschineninneren noch stärker erschwerte als die bekannte Horizontalbettführung, so daß diese Konstruktion keinen Eingang in die Praxis gefunden hat (DE-U-7 106 698).

Es ist ferner eine Kopierfräsmaschine für Turbinenschaufeln bekanntgeworden, bei der die Fräseinheit um eine parallel zur Werkstückachse verlaufende Schwenkachse verschwenkbar ist und der Vorschubantrieb auf der der Schwenkachse abgewandten Seite des Werkstücks angeordnet ist. Bei dieser bekannten Fräsmaschine befand sich die Schwenkachse im wesentlichen in der gleichen Horizontalebene wie die Werkstückachse, so daß der Vorschubantrieb in der bereits oben erläuterten Weise das Gewicht der Fräseinheit ausgleichen mußte, was möglicherweise bei Kopierfräsmaschinen für Turbinenschaufeln wegen des vergleichsweise geringen Gewichtes der Fräseinheiten problemlos in Kauf genommen werden kann, nicht jedoch bei Kurbelwellenfräsmaschinen, bei denen die Fräseinheit ein beträchtliches Gewicht relativ zur Gesamtkonstruktion der Maschine hat (DE-C-957 711).

Weiterhin ist eine Kurbelwellenschleifmaschine bekanntgeworden, bei der die Lager der Schleifscheibe in einer Schwinge liegen, die auf einer verdrehsteifen Schwingachse mit Lagern befestigt ist, wobei die Schwingachse gleichzeitig als Führungsbahn für die axial zu verstellende Schleifscheibe dient. Bei dieser bekannten Maschine war die Mitte des zu schleifenden Hubzapfens der Kurbelwelle, dargestellt durch einen Exzenterzapfen, am Ende des Spindelstockes und die Mitte der Schleifscheibe durch eine Schubstange unmittelbar verbunden, so daß diese Schubstange in Richtung längs der Kurbelwellenachse gegen den zu schleifenden Hubzapfen und die Schleifscheibe versetzt sein mußte (CH-A-415 335).

Bei allen drei bekannten Maschinen wurde kein geschlossener Kraftfluß um das Werkstück herum erreicht, so daß die Bearbeitungskräfte über das Maschinenbett geleitet werden mußten, so daß die Anwendung dieser bekannten Maßnahmen bei Maschinen mit etwa vertikalem Führungsbett zumindest nicht ohne weiteres möglich wäre. Bei entsprechend massiv ausgebildetem vertikalem Führungsbett würde zwar die durch ein vertikales Führungsbett sowieso erreichte gute Geräuschdämpfung nach drei Seiten noch verbessert, eine solche Verbesserung stünde aber in keinem Verhältnis zu dem erforderlichen Mehraufwand.

Weitere Ausgestaltungen der Erfindung ergeben sich aus den Ansprüchen 2 bis 6.

Die Erfindung soll anhand der Zeichnungen näher erläutert werden; es zeigt

Fig. 1 eine teilweise geschnittene Seitenansicht einer Kurbelwellenfräsmaschine nach der Linie I-I der Fig. 2,

Fig. 2 eine teilweise geschnittene Frontalansicht der Kurbelwellenfräsmaschine nach Fig. 1,

Fig. 3 eine Fig. 2 entsprechende teilweise geschnittene Frontalansicht einer Abwandlung der Kurbelwellenfräsmaschine nach Fig. 1 und 2, und

Fig 4 eine Fig. 1 entsprechende teilweise geschnittene Seitenansicht einer weiteren Abwandlung einer Kurbelwellenfräsmaschine nach Fig. 1 und 2.

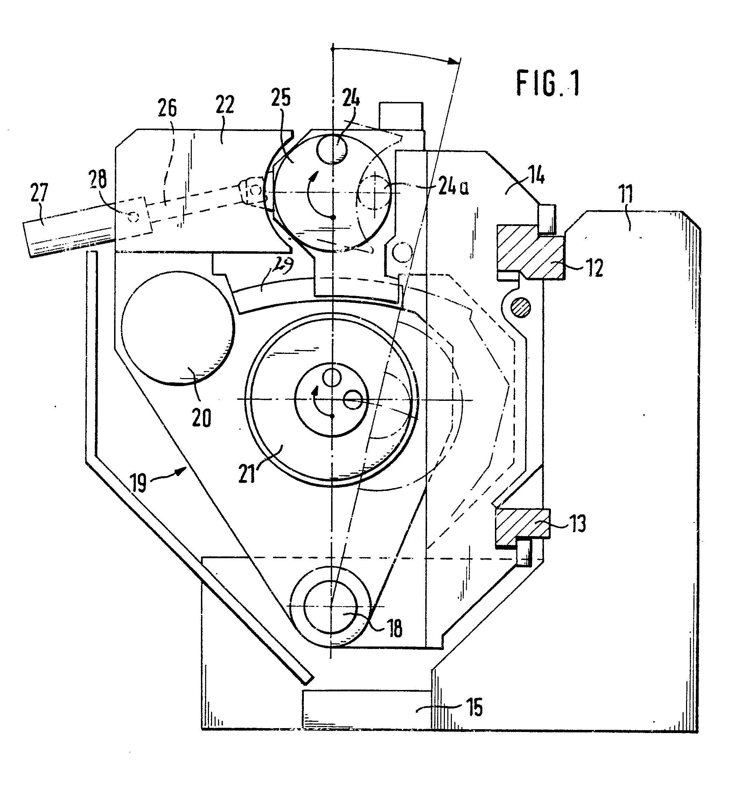

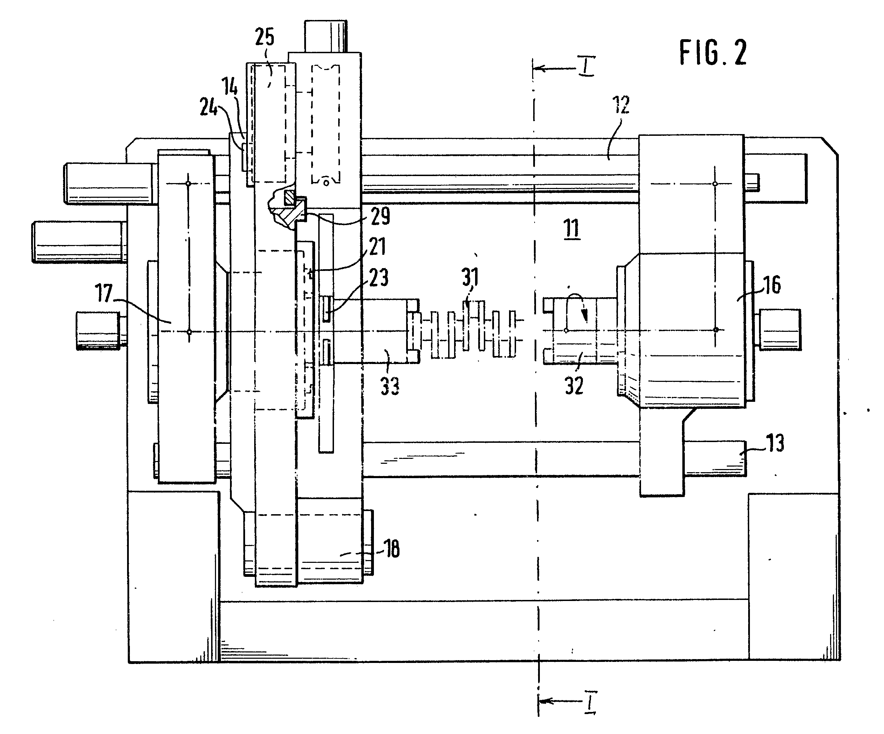

Die in Fig. 1 und 2 dargestellte Kurbelwellenfräsmaschine weist ein Bett 11 auf, beispielsweise aus Beton, das zwei Führungsschienen 12 und 13 trägt, die sich vertikal übereinander befinden und an denen ein Schlitten 14 horizontal verschiebbar ist. Unterhalb des Schlittens 14 befindet sich ein Späneförderer 15. Ferner trägt das Maschinenbett 11 zwei Spannstöcke 16 und 17, in die die zu bearbeitende, teilweise dargestellte Kurbelwelle 31 in bekannter Weise eingespannt wird und die ebenfalls in bekannter Weise synchron angetrieben werden.

Im unteren Teil des Schlittens 14 ist eine Schwenkachse 18 angeordnet, auf der die eigentliche Fräseinheit 19 mit einem Fräserantriebsmotor 20, einem nur schematisch dargestellten Innenfräser 21 und einer diesem fest zugeordneten und diesem entsprechend geformten Abtastschablone 22 schwenkbar gelagert ist. Ferner trägt der Schlitten 19 eine an sich bekannte Lünette 23 zur Abstützung der Kurbelwelle an dem Hauptlagerzapfen, der dem vom Innenfräser 21 bearbeiteten Hubzapfen benachbart ist.

Am oberen Ende trägt der Schlitten 14 einen dem zu bearbeitenden Hubzapfen entsprechenden Meisterzapfen 24, der, wie bei Kurbelwellenfräsmaschinen bekannt, auf einer Scheibe 25 sitzt, die, wie bei Kurbelwellenfräsmaschinen bekannt und in Fig. 2 schematisch dargestellt, synchron mit den beiden Spannfuttern 32 und 33 der Spannstöcke 16 und 17 angetrieben wird.

Am Träger der Meisterzapfenscheibe 25 ist die Kolbenstange 26 eines Hydraulikkolbens schwenkbar gelagert, der in einem Zylinder 27 verschiebbar geführt ist, der bei 28 im oberen Teil der Fräseinheit 19 verschwenkbar gelagert ist.

Bei der in Fig. 1 und 2 dargestellten Ausführungsform der erfindungsgemäßen Kurbelwellenfräsmaschine ist unterhalb der Meisterzapfenscheibe 25 eine seitliche Führung 29 für die Fräseinheit 19 vorgesehen, die in Richtung parallel zur Achse der zu bearbeitenden Kurbelwelle verlaufende Kräfte aufnimmt, so daß die Fräseinheit 19 sehr schmal gebaut werden kann. Statt dessen könnte die Schwenkwelle 18 entsprechend verlängert werden und auf dieser zwei Schwenklager zu beiden Seiten des eigentlichen Fräswerkzeugs 21 vorgesehen sein, dann würde jedoch der Platzbedarf nach beiden Seiten größer. Vorzugsweise ist diese Seitenführung 29 mit einer in Vorschubrichtung, d. h. in Schwenkrichtung, wirkenden Dämpfung versehen, etwa in Form einer Reibfläche, die dafür sorgt, daß die ganze Fräseinheit eventuell auftretenden kleineren ruckartigen Belastungen oder Entlastungen nicht ohne weiteres folgt, was besonders bei im Vergleich zu linearen Führungen, die das gesamte Gewicht der Fräseinheit aufnehmen, sehr reibungsarmen Rundführungen, wie sie durch den Schwenkzapfen 18 gebildet wird, erwünscht ist, damit nicht die träge Masse der Fräseinheit lediglich zur Erhöhung der Trägheit, also des Widerstandes gegen solche kleinen ruckartigen Änderungen, vergrößert werden müßte.

Mit der Maschine nach Fig. 1 und 2 wird wie folgt gearbeitet: Zum Einlegen einer zu bearbeitenden Kurbelwelle wird der Schlitten 14 ganz nach links (gesehen in Fig. 2) verfahren, so daß der Raum zwischen den beiden Spannfuttern 32 und 33 frei zugänglich ist. Dabei muß sich die Fräseinheit 19 in der Mittelstellung befinden, so daß der Fräser 21 über den vorkragenden Teil des Spannfutters 17 gefahren werden kann, und die Lünette 23 muß voll geöffnet sein, so daß sie ebenfalls über den vorkragenden Teil des Spannfutters 17 gefahren werden kann. In dieser Stellung des Schlittens 14 ist der Raum zwischen den beiden Spannfuttern 32 und 33 frei zugänglich.

Die Kurbelwelle wird dann in üblicher Weise in die beiden Spannfutter 16 und 17 eingespannt und der Meisterzapfen 24 ebenfalls in üblicher Weise in die Stellung gebracht, die der Stellung des ersten Hubzapfens, der bearbeitet werden soll, entspricht.

Anschließend wird der Frässchlitten 14 nach rechts verfahren, bis sich der mit Schneiden versehene Innenumfang des Fräsers an der richtigen Stelle dem zu bearbeitenden Hubzapfen gegenüber befindet und die Lünette 23 dem diesen benachbarten Hauptlager gegenüber, das bereits bearbeitet ist. Dieser Hauptlagerzapfen wird dann mit der Lünette 23 in üblicher Weise abgestützt und dann beginnt der Vorschub der Fräseinheit 19. Dazu wird der Hydraulikzylinder 27 mit Druckmittel derart beaufschlagt, daß er den an der Kolbenstange 26 sitzenden Kolben einzieht, damit wird die Fräseinheit 19 im Uhrzeigersinn, gesehen in Fig. 1, verschwenkt. Üblicherweise befindet sich der zu bearbeitende Hubzapfen zu diesem Zeitpunkt an der dem Fräser am weitesten entfernten Stelle seines Umlaufs, und ebenso der Meisterzapfen 24 an der der Abtastschablone 22 fernsten Stelle seines Umlaufs bei 24a in Fig. 1, so daß der Fräser 21 zunächst die dem zu bearbeitenden Hublager benachbarten Wangen zu bearbeiten hat. Hierzu wird im allgemeinen die höchste Fräskraft benötigt, so daß dementsprechend der Druck des dem Zylinder 27 zugeführten Druckmittels den Höchstwert haben muß, dem natürlich durch die Schnittkräfte das Gleichgewicht gehalten wird. Am Ende dieser sogenannten Eintauchbewegung trifft die Abtastschablone 22 auf den Meisterzapfen 24 in der Position 24a und in diesem Moment wird gemäß einer Ausgestaltung der Erfindung der Druck des dem Zylinder 27 zugeführten Druckmittels herabgesetzt. Da der Meisterzapfen zu diesem Zeitpunkt in Ruhe ist, schadet es nichts, wenn die Abtastschablone 22 kurzzeitig, d. h. wenn keine Schnittkräfte mehr auftreten, mit maximalem Druck angelegt wird, dieser ist ja auf jeden Fall wesentlich kleiner als die Fräskraft, bei den in Fig. 1 dargestellten Abmessungsverhältnissen (Distanz Schwenkzapfen 18 — Mitte der Meisterzapfenscheibe 25 doppelt so groß wie der Abstand Schwenkzapfen 18 — Achse der Spannfutter 16, 17) halb so groß, dazu hat der Meisterzapfen unter diesen Umständen den doppelten Durchmesser des zu bearbeitenden Hubzapfens, so daß er dieser reinen Druckbelastung einwandfrei gewachsen ist. Bei dem anschließenden Rundvorschub, bei dem die Kurbelwelle um die Achse der Spannfutter 16, 17 und die Meisterzapfenscheibe 25 um ihren Mittelpunkt synchron rotieren, ist die auftretende maximale Schnittkraft wesentlich kleiner als während des beschriebenen Eintauchvorschubs, und deshalb wird gemäß einer speziellen Ausgestaltung der Erfindung die Vorschubkraft, mit anderen Worten der Druck des dem Hydraulikzylinder 27 zugeführten Druckmittels, entsprechend reduziert, so daß auch dann, wenn der Vorschubkraft durch keinerlei Schnittkraft das Gleichgewicht gehalten wird, der Druck, mit dem die Abtastschablone 22 auf den Meisterzapfen 24 drückt, entsprechend reduziert ist. Damit wird die Abnutzung der Abtastschablone und des Meisterzapfens praktisch vernachlässigbar, so daß es möglich ist, in der beschriebenen Weise die volle Vorschubkraft unmittelbar auf die Abtastschablone wirken zu lassen, so daß eine Fühlersteuerung überflüssig wird, wie sie bisher zur Entlastung von Abtastschablone und Meisterzapfen bei ähnlichen Kopiereinrichtungen notwendig war und die zwangsläufig die sogenannten Kopierfehler mit sich brachte, zu deren Beseitigung wieder zusätzliche Maßnahmen erforderlich waren. Zur Optimierung der Fräsbearbeitung wird die Rundvorschubbewegung des Meisterzapfens in bekannter Weise so geregelt, daß der Vorschub pro Zahn am Fräser immer konstant gehalten wird.

Nach Beendigung des Rundvorschubs befindet sich der Meisterzapfen wieder in der Position 24a, und dann wird dem Hydraulikzylinder 27 in dem Sinne Druckmittel zugeführt, daß die Fräseinheit 19 gegen den Uhrzeigersinn, gesehen in Fig. 1, verschwenkt wird, d. h. zurückgezogen wird, bis sie wieder die Neutralstellung erreicht, dann wird die Lünette 23 geöffnet und der Schlitten 14 weiter nach rechts verschoben, bis das nächste Hublager erreicht wird, wo sich die gleichen Vorgänge abspielen und so fort, bis sämtliche Hubzapfen bearbeitet sind. Danach wird die Fräseinheit wieder in die Stellung rechts in Fig. 2 zurückgefahren, die bearbeitete Kurbelwelle wird entnommen und eine neue geladen, woraufhin sich die beschriebenen Vorgänge wiederholen.

Es wurde bereits erwähnt, daß die Fräskraft während des Rundvorschubs einen Maximalwert annimmt, mit anderen Worten sich ändert. Da die Abtastschablone 22 jeweils mit dem Teil der Vorschubkraft am Meisterzapfen 24 anliegt, dem durch die Fräskräfte nicht das Gleichgewicht gehalten wird, würde eine maximale Schonung von Abtastschablone und Meisterzapfen erreicht, wenn die Vorschubkraft genau entsprechend der jeweils benötigten Fräskraft geregelt wird. Das ist etwa durch Messung der dem Motor zugeführten Leistung oder durch Messung des Anlagedruckes möglich, erfordert aber einen nicht unbeträchtlichen zusätzlichen Aufwand. Dieser ist im allgemeinen wirtschaftlich nicht gerechtfertigt, wenn, wie beschrieben, während der Eintauchbewegung die Wangen bearbeitet werden können, ist allerdings zumindest zweckmäßig, wenn ein erheblicher Teil der Wangenbearbeitung während des Rundvorschubs durchgeführt werden muß, was in einigen Fällen erforderlich ist.

Es wurde bereits erwähnt, daß die Fräseinheit bei der erfindungsgemäßen Kurbelwellenfräsmaschine sehr schmal gemacht werden kann, d. h. eine vergleichsweise geringe Ausdehnung in Richtung parallel zur Werkstückachse haben kann. Dadurch ergibt sich die Möglichkeit, zwei Fräseinheiten sehr eng benachbart anzuordnen, und zwar in einem Abstand, der dem von zwei Hublagerzapfen einer Kurbelwelle entspricht. Zur Erhöhung der Produktionsleistung mit einer Maschine bietet sich deshalb gewissermaßen die Möglichkeit an, zwei Fräseinheiten vorzusehen. Hierbei ist natürlich darauf zu achten, daß die Fräseinheiten spiegelbildlich ausgeführt sind und der Fräser jeweils an der der anderen Fräseinheit zugewandten Seite angeordnet ist.

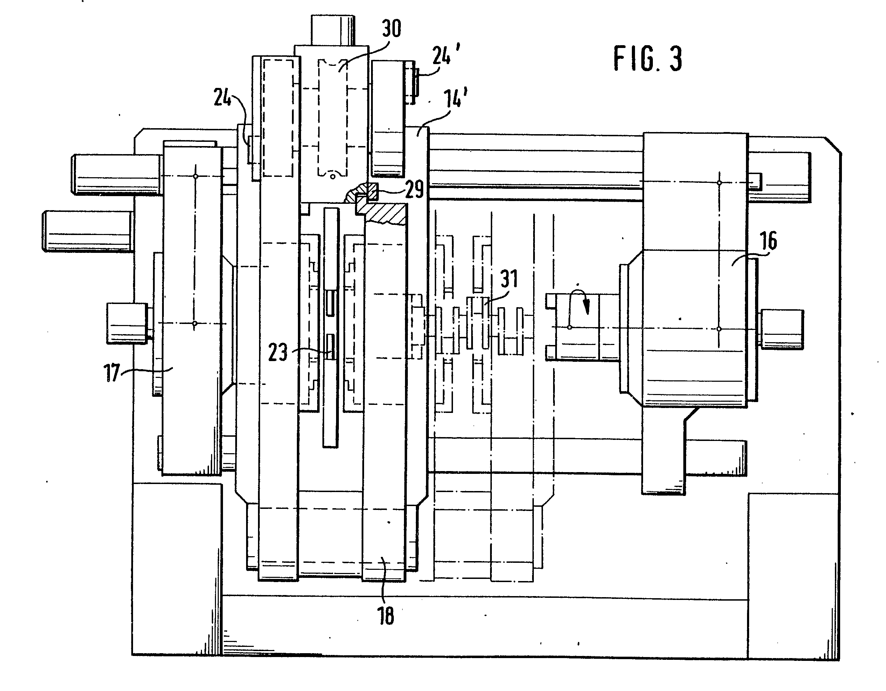

In Fig. 3 ist eine Weiterentwicklung dieses Grundgedankens dargestellt. Wie bereits aus Fig. 2 erkennbar, benötigt die zur Bearbeitung eines Hublagerzapfens benötigte Abstützung in Form einer Lünette 23 für den benachbarten Hauptlagerzapfen keine zusätzliche unabhängige Stützkonstruktion, sondern kann unmittelbar am Schlitten 14 angeordnet sein. Da bei der erfindungsgemäßen Konstruktion die Führung der Fräseinheit sich im unteren Teil des Schlittens 14 befindet und die Lünette am mittleren Teil des Schlittens 14 abgestützt sein kann, stören sich diese beiden Abstützungen nicht, wie das früher der Fall war, so daß zwei Fräseinheiten auf dem gleichen Längsschlitten 14' (Fig. 3) angeordnet werden können. Im übrigen sind die Fräseinheiten und der Meisterzapfen in der gleichen Weise aufgebaut und angeordnet wie bei der Ausführungsform nach Fig. 1, so daß Wiederholungen überflüssig sind. Durch die Anordnung auf einem gemeinsamen Längsschlitten 14' braucht jedoch für beide Meisterzapfen 24 und 24' nur ein einziger gemeinsamer Antrieb 30 vorgesehen zu sein, der genauso aufgebaut ist wie der Antrieb für einen einzigen Meisterzapfen, d. h. synchron zu den beiden Spannfuttern 32 und 33 ist. Da beide Fräseinheiten auf diese Weise zwar völlig synchron gesteuert werden, sich aber ansonsten vollkommen unabhängig voneinander bewegen können, ist es ohne weiteres möglich, daß beide Fräseinheiten gleichzeitig die jeweilige Eintauchbewegung ausführen, und anschließend auch gemeinsam der Rundvorschub ausgeführt wird. Hierbei ist es ohne weiteres möglich, daß die Fräseinheiten aufgrund der zueinander verschiedenen Stellung der Hublagerzapfen bzw. der entsprechenden Meisterzapfen 24, 24' einander entgegengerichtete Schwenkbewegungen um die Schwenkachse 18 ausführen. Ein konstanter Vorschub pro Zahn am Fräser ist hierbei jedoch nicht erreichbar. Durch eine an sich bekannte Regelung kann aber die Rundvorschubgeschwindigkeit jeweils so gesteuert werden, daß der Vorschub pro Zahn bei beiden Fräsern trotzdem günstige Mischwerte erreicht.

Bei den bisher beschriebenen Ausführungsformen, auch bei der nach Fig. 3, wurde eine Kopiereinrichtung mit einer Abtastschablone 22, einem Meisterzapfen 24 und einem Hydraulikzylinder 27 angewandt. Für den Fachmann ist selbstverständlich, daß etwa der Hydraulikzylinder 27 durch einen anderen Antrieb, insbesondere auch einen elektrischen Antrieb ersetzt werden kann.

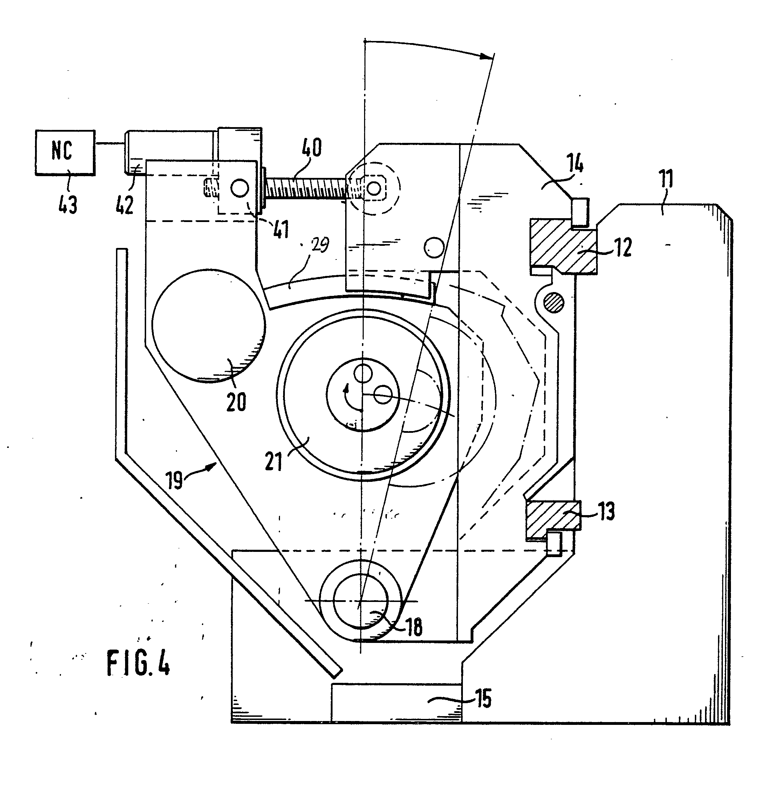

Bei der Ausführungsform nach Fig. 4 ist dagegen anstelle des Hydraulikzylinders 27, der Abtastschablone 22 und des Meisterzapfens 24 jedoch, gerade aufgrund der Anordnung außerhalb des Spänebereichs und der geringeren Belastung bei Vergrößerung des Weges im Vergleich zum Fräser, eine Kugelrollspindel 40 vorgesehen, die das obere Ende des Schlittens 14 mit dem oberen Ende der Fräseinheit 19 verbindet, d. h. an einem von beiden Teilen befindet sich die Mutter 41 und am anderen ist die Kugelrollspindel 40 gelagert. Die Mutter 41 oder die Kugelrollspindel 40 ist dann mit einem Antriebsmotor 42 gekuppelt, der in bekannter Weise mit einer numerischen Steuerung 43 in Abhängigkeit von der Drehung der Kurbelwelle, d. h. der beiden Spannfutter 32, 33 und der Position des jeweils zu bearbeitenden Hubzapfens, gesteuert wird, so daß er die gleiche Schwenkbewegung der Fräseinheit 19 herbeiführt, wie oben in Verbindung mit der hydraulisch angetriebenen rein mechanischen Kopiereinrichtung beschrieben. Entsprechend läßt sich ersichtlich auch die Ausführungsform nach Fig. 3 abwandeln.

**Patentansprüche**

1. Kurbelwellenfräsmaschine mit wenigstens einer in einem Schlitten (14) vorschubbeweglich gelagerten Fräseinheit (19) zum Bearbeiten der Hublagerzapfen, deren Vorschub in Abhängigkeit von der Drehung des Werkstückes mittels Kopiereinrichtung oder numerischer Steuerung steuerbar ist, und wobei der Schlitten (14) auf einer Führung (12, 13), deren Ebene auf einer Seite des Werkstückes parallel zu dessen Achse verläuft, in Richtung parallel zur Werkstücklängsachse verschiebbar ist, dadurch gekennzeichnet, daß die Ebene der Führung (12, 13) im wesentlichen vertikal verläuft, daß die bzw. jede Fräseinheit (19) im Schlitten (14) um eine parallel zur Werkstückachse verlaufende und unterhalb der Werkstückachse liegende Schwenkachse (18) verschwenkbar ist, und daß der Vorschubantrieb (26, 27, 28) auf der der Schwenkachse (18) abgewandten Seite des Werkstücks angeordnet ist und das Werkstück überspannt.

2. Kurbelwellenfräsmaschine nach Anspruch 1, dadurch gekennzeichnet, daß in radialem Abstand von der Schwenkachse (18) am Schlitten (14) eine Axialkräfte aufnehmende kreisbogenförmige Führung (29) für die Fräseinheit vorgesehen ist.

3. Kurbelwellenfräsmaschine nach Anspruch 1, dadurch gekennzeichnet, daß zur Schwenklagerung der Fräseinheit (19) im Schlitten (14) zwei in axialem Abstand voneinander angeordnete Schwenklager vorgesehen sind.

4. Kurbelwellenfräsmaschine nach einem der Ansprüche 1 – 3, dadurch gekennzeichnet, daß zwei spiegelbildlich ausgebildete Fräseinheiten (19) zur Bearbeitung von Hublagerzapfen vorgesehen sind.

5. Kurbelwellenfräsmaschine nach Anspruch 4, dadurch gekennzeichnet, daß die beiden Fräseinheiten (19) auf einem gemeinsamen Längsschlitten (14') angeordnet sind.

6. Kurbelwellenfräsmaschine nach Anspruch 5, dadurch gekennzeichnet, daß ein gemeinsamer Antrieb (30) für beide Meisterzapfen vorgesehen ist.

## Claims

1. Crankshaft milling machine having at least one milling unit (19) for milling the stroke bearing journals, which is supported in a manner suitable for feed movement, in a slide (14), the feed of which is controllable as a function of the rotation of the workpiece by means of a copying means or numerical control means, said slide (14) being slidable, in direction parallel to the longitudinal axis of the workpiece, on a guiding means (12, 13) the plane of which extends on one side of the workpiece and parallel to its axis, characterized in that the plane of the guiding means (12, 13) extends substantially vertically, that the, or each, respectively, milling unit (19) is tiltable within said slide (14) about a pivot axis (18) extending parallel to the workpiece axis and being disposed below said workpiece axis, and that the feed drive (26, 27, 28) is disposed on the side of the workpiece facing away from said pivot axis (18) and extends over said workpiece.

2. Crankshaft milling machine according to claim 1, characterized in that in a radial distance from said pivot axis (18) there is provided at said slide (14) a guiding means (29) having the form a circular arc for said milling unit and adapted to take axially directed forces.

3. Crankshaft milling machine according to claim 1, characterized in that two axially spaced pivot supporting bearings are provided in said slide (14) for pivotally supporting said milling unit (19).

4. Crankshaft milling machine according to any of the claims 1 to 3, characterized in that two mirror image milling units (19) are provided for milling stroke bearing journals.

5. Crankshaft milling machine according to claim 4, characterized in that both milling units (19) are disposed on a common longitudinal slide (14).

6. Crankshaft milling machine according to claim 5, characterized in that a common drive (30) for both master pins is provided.

## Revendications

1. Fraiseuse de vilebrequins comprenant au moins une unité (19) de fraisage, qui est montée, avec possibilité d'avance, sur un chariot (14), qui est destinée à l'usinage des manetons et dont l'avance peut être. commandée à l'aide d'un dispositif de copiage ou numériquement en fonction de la rotation de la pièce à usiner, le chariot (14) pouvant coulisser parallèlement à l'axe longitudinal de la pièce à usiner sur un dispositif (12, 13) de guidage dont le plan s'étend d'un côté de la pièce à usiner parallèlement à l'axe de celle-ci, caractérisée en ce que le plan du dispositif (12, 13) de guidage est sensiblement vertical, la ou chaque unité (19) de fraisage sur le chariot (14) peut pivoter autour d'un axe (18) s'étendant parallèlement à l'axe de la pièce à usiner et se trouvant en dessous de l'axe de la pièce à usiner, et la commande (26, 27, 28) d'avance est disposée du côté de la pièce à usiner qui est éloigné de l'axe (18) et serre la pièce à usiner.

2. Fraiseuse suivant la revendication 1, caractérisée en ce qu'à une certaine distance radiale de l'axe (18) de pivot sur le chariot il est prévu un dispositif de guidage (29) qui est en forme d'arc de cercle, qui absorbe les forces axiales et qui est destiné à guider l'unité de fraisage.

3. Fraiseuse selon la revendication 1, caractérisée en ce que pour le montage à pivotement de l'unité (19) de fraisage sur le chariot (14), sont prévus deux paliers autorisant le pivotement, disposés à une certaine distance l'une de l'autre suivant la direction axiale.

4. Fraiseuse suivant l'une des revendications 1 à 3, caractérisée en ce deux unités (19) de fraisage smétriques comme en un miroir sont prévues pour l'usinage des manetons.

5. Fraiseuse suivant la revendication 4, caractérisée en ce que les deux unités (19) de fraisage sont montées sur un chariot (14) longitudinal commun.

6. Fraiseuse suivant la revendication 5, caractérisée en ce qu'il est prévu un entraînement (30) commun pour les deux tourillons maîtres.

FIG.1

FIG. 2

FIG. 3

FIG.4